# FASCICULE DE BREVET EUROPEEN

(11) **EP 3 570 518 B1**
(45) Date de publication et mention de la délivrance du brevet: **18.11.2020**
(21) Numéro de dépôt: 19174255.0
(22) Date de dépôt: 14.05.2019
(51) Int. Cl.: H04L 29/06, H04W 12/06, H04W 12/08, G06F 21/34, G06F 21/35, G06F 21/31

(54) **SYSTEME ET PROCEDE D'AUTHENTIFICATION UTILISANT UN JETON A USAGE UNIQUE DE DUREE LIMITEE**
AUTHENTIFIZIERUNGSSYSTEM UND -VERFAHREN, DAS EIN TOKEN ZUR EINMALIGEN VERWENDUNG MIT BEGRENZTER LEBENSDAUER VERWENDET
AUTHENTICATION SYSTEM AND METHOD USING A LIMITED-LIFE DISPOSABLE TOKEN

(30) Priorité: 16.05.2018 FR 1854072
(43) Date de publication de la demande: 20.11.2019
(73) Titulaire: IN-IDT, 75016 Paris (FR)
(72) Inventeur: FINKELSTEIN, Vincent, 95530 La Frette sur Seine (FR)
(74) Mandataire: Marks & Clerk France

(56) Documents cités:
- WO-A1-2017/140993
- US-A1- 2015 270 971
- Anonymous: "One-time password - Wikipedia", , 18 avril 2018 (2018-04-18), XP055563594, Extrait de l'Internet: URL:https://en.wikipedia.org/w/index.php?t itle=One-time_password&oldid=837048118 [extrait le 2019-03-01]

## Description

L'invention concerne un système et un procédé permettant d'authentifier un individu lors d'une transaction ou d'un contrôle d'identité, en utilisant notamment un jeton d'usage d'identité unique daté et limité dans le temps. Le système en fonctionnement normal ne mémorise pas d'informations confidentielles propres à un individu.

L'invention trouve son utilisation notamment dans les domaines suivants : lors d'une connexion sur un site Web (facebook®, google®, ...), lors d'opérations de paiements en ligne, pour sécuriser des réservations en ligne (hôtels, train, avion), pour accéder à une messagerie électronique, pour des serveurs de transactions bancaires ou pour les banques en ligne.

Les systèmes de paiements et de réservations par internet mettent en œuvre une étape d'identification de l'individu. Ceci pose notamment le problème d'une éventuelle usurpation d'identité numérique. Le paiement en ligne ou e-paiement peut devenir frauduleux si un tiers a dérobé les données confidentielles d'un individu, par exemple son identité et ses coordonnées bancaires.

Différentes méthodes sont actuellement envisagées pour sécuriser les transactions, notamment au niveau de l'authentification sur un serveur web et du paiement électronique sur internet.

Pour l'authentification sur un serveur web, deux possibilités existent :
- Soit un système de mot de passe qui oblige à stocker le hash de la fonction de hachage en central et qui présente l'inconvénient de pouvoir être piraté ;
- Soit un système d'authentification basé sur un mécanisme de mot de passe à usage unique OTP (one time password) envoyé sur un équipement mobile, tel qu'un téléphone, une tablette, ou une messagerie électronique. L'OTP est en clair et le message SMS (Short Message Service) contenant cet OTP peut être lu à l'insu du propriétaire du téléphone. Il en est de même pour les messages électroniques (couriels ou emails, le compte e-mail qui peut être piraté car souvent la connexion est réalisée par un simple mot de passe).

Le paiement électronique sur internet passe par l'utilisation d'un numéro de carte bancaire ou d'un mot de passe unique envoyé directement sur le téléphone d'un utilisateur ou d'un support équivalent. La première méthode nécessite l'envoi en central des informations de la carte bancaire. La deuxième méthode nécessite la mise en place d'une interface de communication entre le serveur web et les serveurs centraux des différentes banques. Il n'est pas possible pour un utilisateur de paramétrer le compte utilisateur.

Différents systèmes sont décrits dans l'art antérieur pour tenter de combattre la fraude, l'usurpation d'identité et toute tentative frauduleuse dans le cas de transactions qui sont réalisées dans l'environnement Internet.

La demande de brevet US 2017/0094573 divulgue un mécanisme d'authentification basé sur un code barre ou QRcode. Le QRcode est un élément d'entrée pour authentifier un individu.

La demande de brevet WO 2009/071756 décrit un système dans lequel une transaction est validée en prenant en temps réel « live » des données biométriques, telles que, la voix, l'image et en vérifiant la concordance ou « matching » des données en central.

La demande de brevet WO 2015/168109 divulgue un terminal de paiement qui permet de sécuriser les transactions avec un système de capture et un « matching » biométrique.

La demande de brevet WO 2015/135744 décrit un procédé mis en œuvre par ordinateur pour confirmer une identité numérique d'un utilisateur par rapport à un système informatique de service, avec vérification de l'identité numérique de l'utilisateur au moyen de l'évaluation automatique à la fois des valeurs d'attributscontenus dans la requête de l'utilisateur et du niveau de confiance calculé pour l'utilisateur, et un ou plusieurs attributs de la requête.

La demande de brevet WO2015/028339 décrit un terminal de reconnaissance faciale et de lecture à reconnaissance optique de caractères OCR.

La demande de brevet WO2016/083987 concerne une transaction électronique qui utilise le « match » biométrique en central.

Le document US 2015/270971 divulgue un procédé d'authentification qui fait appel à deux mots de passe générés pour deux connexions différentes.

La demande de brevet WO 2017/140993 décrit un procédé d'authentification dans lequel un code d'authentification est comparé à un code de vérification, ce dernier étant généré à partir d'un compte bancaire et d'une donnée temporelle.

Le document Anonymous, intitulé « One-time password - Wikipedia », 18 avril 2018, XP055563594 divulgue, la génération d'un mot de passe dynamique, valable pour une session et moins vulnérable aux attaques qu'un mot de passe statique.

Malgré tous les avantages apportés par les systèmes et les procédés connus de l'art antérieur, ces derniers présentent des limites dans le niveau de sécurité pouvant être atteint.

L'invention a notamment pour objectif de fournir un système et un procédé qui permettent notamment de renforcer la sécurité lors du traitement d'une transaction, telle qu'une vérification d'identité pour le paiement ou une réservation en ligne, ou encore une des applications présentées ci-dessus.

L'objet de l'invention repose notamment sur la mise en place d'un mécanisme de jeton d'usage unique, daté et limité dans le temps.

L'invention concerne un procédé pour authentifier un utilisateur équipé d'un dispositif mobile dans un système comprenant un site web requérant la génération d'un jeton d'usage J, un serveur comprenant un annuaire de compte identité numérique pour des utilisateurs, caractérisé en ce qu'il comporte au moins les étapes suivantes :
o Sur requête d'un utilisateur, le site web demande la génération d'un jeton d'usage J ayant une durée de validité limitée dans le temps pour le compte de l'utilisateur,
o La demande de génération de jeton d'usage est transmise à un annuaire de compte d'identité numérique qui vérifie l'état du compte identité numérique de l'utilisateur,
o Dans le cas où l'état de compte d'identité numérique est valable, un système de génération de jeton génère un jeton d'usage de durée de validité, chiffre un mot de passe à usage unique OTP avec une clé publique de l'utilisateur et envoie une demande d'émission de jeton d'usage vers le dispositif mobile de l'utilisateur, L'utilisateur décide d'accepter ou de refuser cette demande d'émission de jeton d'usage J,
o Lorsque l'utilisateur accepte l'émission d'un jeton d'usage, l'utilisateur saisit un code d'authentification au niveau de son dispositif mobile, cette saisie générant une demande de déchiffrement du mot de passe à usage unique chiffré OTP vers une application d'identification d'identité numérique implémentée sur un élément sécurisé, qui déchiffre le mot de passe OTP et le transmet pour affichage au niveau d'un dispositif de saisie des informations de l'utilisateur, et simultanément l'application d'identification d'identité numérique vérifie la validité temporelle du jeton généré,
o L'utilisateur va saisir l'OTP sur le site web,
o Le site internet vérifie l'OTP en utilisant l'OTP généré avec la clé publique de site au niveau du système de génération d'un jeton d'usage, l'OTP ayant été reçu et déchiffré par le site, et simultanément, le site web vérifie la validité temporelle du jeton généré,
o Suite au résultat de cette vérification, l'accès de l'utilisateur au site web est accepté, ou l'accès est refusé.

Selon un mode de réalisation, on utilise un jeton d'usage J comprenant au moins les paramètres suivants : date de création, heure de création, durée de validité, type d'usage, numéro de jeton, pseudo de l'utilisateur, signature du hash du contenu de jeton.

Selon un autre mode, on utilise un jeton d'usage comprenant un OTP chiffré avec une clé publique du site web ou une clé de l'utilisateur, ou encore un jeton comprenant les données bancaires de l'utilisateur chiffrées avec OTP.

L'invention concerne aussi un système pour authentifier un utilisateur, le système comprenant un site web, un serveur de jeton d'usage communiquant avec le site web, caractérisé en ce qu'il comporte au moins les éléments suivants :
- Un annuaire de compte identité numérique communiquant avec le serveur de jeton d'usage et avec une application utilisateur, ledit annuaire de compte d'identité numérique étant adapté à vérifier l'étant du compte identité numérique de l'utilisateur, le serveur de jeton d'usage étant adapté à jeton d'usage de durée de validité est généré, un mot de passe à usage unique OTP est chiffré avec une clé publique de l'utilisateur, et à transmettre une demande d'émission de jeton d'usage vers le dispositif mobile de l'utilisateur,
- Une application chargée sur un support configurée pour déchiffrer un mot de passe à usage unique OTP chiffré et transmettre l'OTP déchiffré vers l'application utilisateur, ladite application étant activée lorsque l'utilisateur accepte l'émission d'un jeton d'usage,
- Le site web est configuré pour la saisie des informations d'identité propres à l'utilisateur et
   - pour vérifier l'OTP déchiffré en utilisant l'OTP généré avec une clé publique de site au niveau du système de génération d'un jeton d'usage J,
   - simultanément vérifier la validité temporelle du jeton d'usage généré, et
   - suite au résultat de cette vérification, accepter ou refuser l'accès de l'utilisateur au site web.

Le support et l'application utilisateur communiquent, par exemple, via une liaison sans contact.

Le serveur de jeton d'usage peut être configuré pour générer des jetons d'usage comprenant au moins les informations suivantes : date de création, heure de création, durée de validité, type d'usage, numéro de jeton, pseudo de l'utilisateur, OTP chiffré avec une clé de l'utilisateur ou avec une clé du site web, signature du hash du contenu de jeton et/ou données bancaires.

Le support est, par exemple, une carte à puce.

L'utilisateur est équipé d'un téléphone mobile, d'un ordinateur personnel ou d'une tablette permettant la saisie des données.

D'autres caractéristiques et avantages de la présente invention apparaîtront mieux à la lecture de la description d'exemples de réalisation annexée des figures qui représentent :
- Figure 1, un exemple d'architecture du système selon l'invention
- Figure 2, un diagramme (flowchart) des différentes étapes mises en œuvre par le procédé selon l'invention, et
- Figure 3, un diagramme expliquant le fonctionnement d'un compte informatique « identité numérique ».

Afin de mieux illustrer l'objet de l'invention, l'exemple qui suit est donné, à titre illustratif et nullement limitatif, dans le cadre d'une transaction électronique mettant en jeu internet.

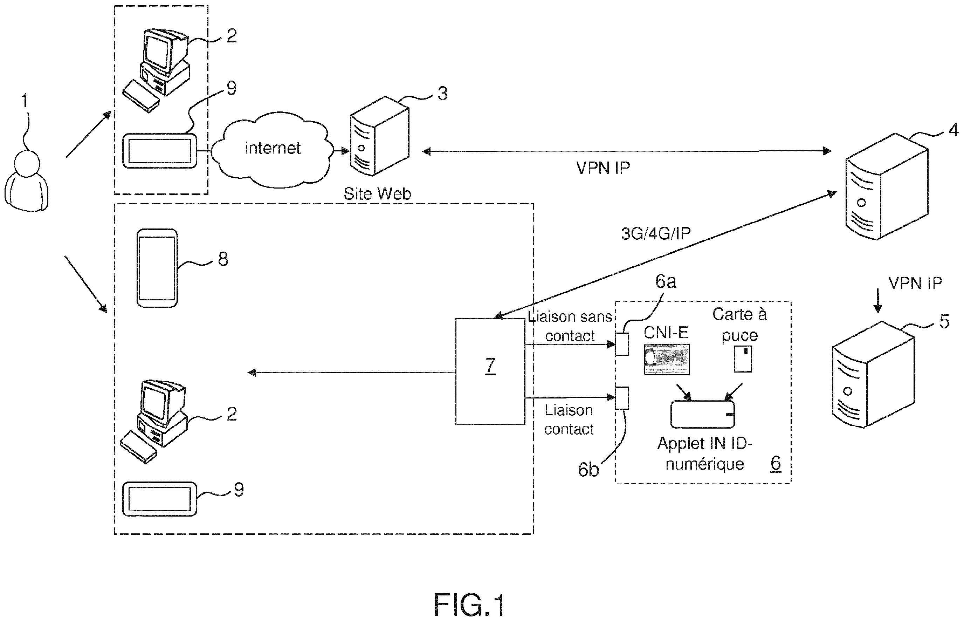

La figure 1 illustre un exemple d'architecture selon l'invention comprenant un utilisateur 1, un dispositif 2 de saisie d'informations, permettant d'entrer les demandes et coordonnées de l'utilisateur, tel qu'un ordinateur, une tablette ou un téléphone mobile, un réseau de type internet, un site web nécessitant une authentification 3, un dispositif de génération de jeton d'usage 4, un annuaire de compte identité numérique 5 et un dispositif 6 comprenant une application exécutée sur un environnement sécurisé portatif, par exemple une carte à puce, plus connue sous l'expression anglo-saxonne « Applet » CNI-E. Il est aussi possible d'utiliser l'environnement d'exécution sécurisé d'un téléphone, connu sous l'acronyme anglo-saxon « TEE » pour Trusted Execution Environment). Le dispositif 6 communique avec une application utilisateur 7 implémentée sur un ordinateur personnel PC, un téléphone mobile 8, ou une tablette 9, ou tout autre dispositif équivalent.

Le site web comporte une application de gestion de compte utilisateur. Il communique avec le dispositif de génération de jeton d'usage au moyen d'une liaison privée par exemple une liaison VPN IP (Virtual Private Network Internet Protocol).

Le dispositif de génération de jeton d'usage ou serveur de jeton est, par exemple, un serveur applicatif hébergé sur une infrastructure informatique II communique avec l'application utilisateur « Applet » au moyen d'une liaison téléphonique de troisième génération 3G, ou de quatrième génération 4G ou par liaison internet IP, et avec l'annuaire de compte identité numérique 5 au moyen d'une liaison VPN IP.

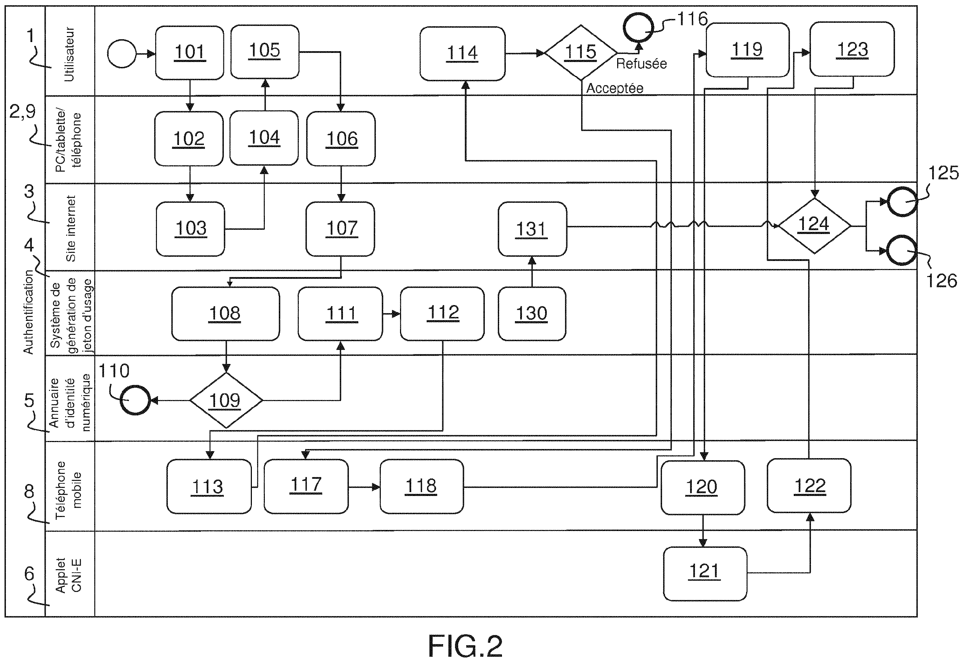

L'annuaire de compte Identité Numérique 5 est, par exemple, un serveur applicatif hébergeant au moins les informations suivantes :
a - Compte utilisateur :
   i. pseudo, nom d'usage de l'utilisateur,
   ii. N° de téléphone mobile ou/et e-mail,
   iii. N° du document d'identité physique, carte d'identité, passeport,
   iv. Liste des sites autorisés à demander un jeton d'usage avec un niveau d'authentification requis par l'application, par exemple le niveau de sécurité requis par l'union européenne connu sous l'acronyme eIDAS,
   v. Etat du compte informatique « identité numérique » utilisateur qui respecte le diagramme illustré en figure 2,
   vi. Certificat identité numérique, ID-numérique, certificat utilisateur contenant une clé publique,
   vii. La journalisation des demandes d'usages, historisation de l'activité des demandes d'usages émises par le système de jeton;
b - Information des sites autorisés à demander un jeton d'usage
   i.Nom du site,
   ii. Certificat d'infrastructure à clé publique PKI (Public Key Infrastructure).

Le support ou document porteur 6 permettant l'identification est, par exemple, un élément sécurisé portatif (téléphone mobile, tablette numérique, etc.) sur lequel est implémentée l'application Applet qui communique avec l'application utilisateur au moyen, par exemple, d'une liaison sans contact. Le document porteur 6 peut être un support physique intégrant un élément de sécurité, tel qu'un circuit électronique d'une carte à puce, relié à une antenne 6a (pour une liaison sans contact) et/ou une pastille contact 6b (pour une liaison avec contact). L'élément de sécurité héberge une application de type Applet 'ID numérique'.

L'application héberge les données suivantes :
i. N° série ID-numérique,
ii. Clé de chiffrement asymétrique,
iii. Certificat à clé publique PKI (Public Key Infrastructure) jeton d'usage,
iv. Coordonnés bancaires,
v. Des données biométriques, par exemple, l'empreinte biométrique de l'utilisateur au format de l'algorithme de quantification WSQ (Wavelet Scalar Quantization), des données optionnelles en fonction des besoins d'usage, la photo, la voix,

L'application Applet implémente les fonctionnalités suivantes disponibles pour un utilisateur :
i. Fourniture du numéro d'identité (CNI, carte nationale d'identité ou passeport),
iii. Déchiffrement du mot de passe à usage unique OTP,
iv. Chiffrement compte bancaire avec OTP.

L'application Utilisateur 7 est un logiciel téléchargeable par l'utilisateur sur un téléphone et/ou tablette et/ou PC fixe/mobile. L'application implémente notamment les fonctions suivantes :
i. possibilité pour l'utilisateur de charger des informations bancaires sur l'applet ID-numérique,
ii. Chargement certificat du système de jeton sur l'applet ID-numérique,
iii. Demande de régénération paire de clé de chiffrement asymétrique à l'applet ID-numérique.

Un exemple de structure de jeton est donné dans le tableau ci-dessous :

| Usage | Authentification | | E-Paiement |
|---|---|---|---|
| | Substantiel | fort | |
| Date de création | x | x | x |
| Heure de création | x | x | x |
| Durée de validité | x | x | x |
| Type Usage | x | x | x |
| Numéro de jeton | x | x | x |
| Pseudo - nom d'emprunt | | x | x |
| N° autorisation | x | x | x |
| OTP (One Time Password) chiffré avec clé publique site ou utilisateur | x | x | |
| Données bancaires chiffrées avec OTP | | | x |
| Signature du hash du contenu du jeton | x | x | x |

Dans ce tableau, les paramètres surlignés sont nécessaires pour la mise en œuvre du procédé selon l'invention.

La figure 2 représente un organigramme de programmation qui regroupe un exemple de succession d'étapes mises en œuvre par le procédé selon l'invention :
101 - L'utilisateur 1 saisit une adresse Internet d'un site web 3 par l'intermédiaire d'un ordinateur personnel 2 ou PC, d'une tablette, d'un téléphone mobile (smartphone) ou de tout autre moyen équivalent lui permettant d'exprimer sa demande,
102 - L'application du PC transmet cette demande d'accès au site web 3,
103 - Le site web émet une demande d'authentification au PC, qui traduit cette demande à l'utilisateur 1 en une demande de saisie des informations permettant son authentification 104, demande qui s'affiche sur l'écran du PC, 105 - L'utilisateur 1 saisit son numéro de compte d'identité numérique par le clavier du PC, par exemple, puis le PC envoie ces informations (compte d'identité numérique) saisies vers le site web 3, 106,
107 - Le site web demande au système de génération de jeton d'usage, un jeton d'usage J pour le compte d'identité saisi, le jeton d'usage étant unique, daté et limité dans le temps,
108 - Le système de génération de jeton d'usage va transmettre cette demande à l'annuaire d'identité numérique qui va faire une vérification de l'état du compte informatique de l'individu, 109,
110 - Si l'état du compte n'est pas valable, alors le compte est bloqué et il n'y aura pas de génération de jeton d'usage, cette information sera remontée vers le site web,
111 - L'annuaire d'identité a accepté la demande de jeton et la génération d'un jeton d'usage pour l'application requise par l'utilisateur est autorisée. Le système de génération d'un jeton d'usage génère et chiffre un mot de passe à usage unique ou OTP (One-Time password) avec la clé publique de l'utilisateur, puis le système de génération de jeton d'usage envoie une notification de demande d'émission de jeton d'usage, vers le téléphone mobile 8 de l'utilisateur, 112, la clé publique est stockée en central, au niveau du compte de l'utilisateur, le certificat contenant la clé publique, le jeton d'usage contient les paramètres listés dans le tableau présenté ci-dessus,
113 - Le téléphone mobile 8 reçoit la notification de demande d'émission de jeton d'usage,
114 - L'utilisateur 1 lit la notification et prend la décision 115 d'accepter ou de refuser cette notification. Si l'utilisateur refuse cette notification, le système en reste là, 116,
117 - Lorsque l'utilisateur accepte la notification, le téléphone mobile 8 détecte automatiquement la présence de l'Applet et demande à l'utilisateur de saisir le code PIN de l'Applet, 118,
119 - L'utilisateur va saisir son code PIN, au niveau du téléphone mobile, La saisie du code PIN génère une demande de déchiffrement de l'OTP, vers l'Applet CNI-E,120,
121 - L'Applet 121 va déchiffrer l'OTP et en même temps va vérifier si le jeton est toujours valable, en contrôlant notamment si la date de création, l'heure de création et la durée de validité du jeton à usage unique J sont valables,
122 - L'OTP déchiffré est affiché au niveau du téléphone portable de l'utilisateur,
123 - L'utilisateur va saisir l'OTP sur le site web 3,
124 - Le site internet ou web vérifie l'OTP en utilisant l'OTP généré avec la clé publique de site, 130 au niveau du système de génération d'un jeton d'usage, l'OTP ayant été reçu et déchiffré par le site, en même temps, le site web va vérifier la validité temporelle du jeton, comme il a été indiqué ci-dessus pour l'applet,
125 - L'accès à l'application pour l'utilisateur est accepté,
126 - L'accès est refusé.

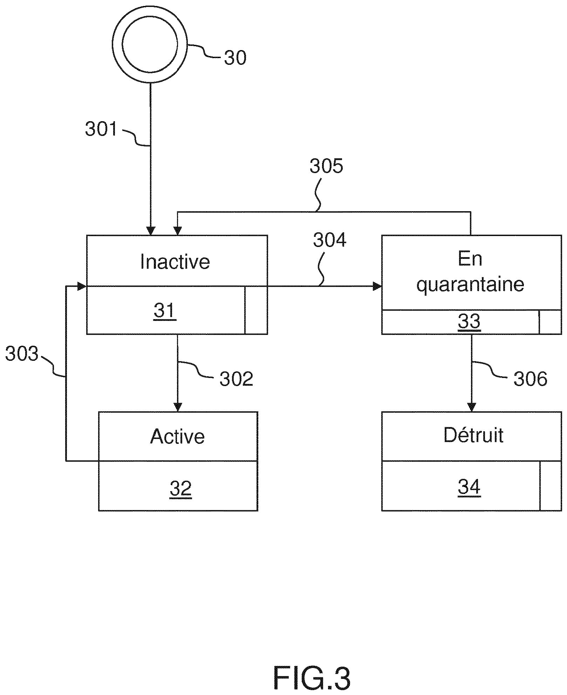

La figure 3 illustre le diagramme d'état d'un compte utilisateur informatique.

Le compte utilisateur peut prendre les états suivants :
30 - état initial,
31 - création du compte,
32 - compte activé,
33 - compte mis en quarantaine par un administrateur d'un site ou par l'utilisateur lui-même suite à une tentative d'usurpation, par exemple,
34 - destruction du compte.

L'utilisateur gère les changements d'état 301 correspondant à la création du compte, l'activation du compte 302 et l'inactivation du compte 303. L'utilisateur ou un administrateur gère les changements d'état suivants : le passage d'un état de mise en quarantaine du compte vers un état inactif, 305, ou vers une suppression du compte 306. La mise en quarantaine ou la suppression peuvent résulter de la découverte d'une tentative frauduleuse d'utilisation du compte utilisateur.

Le système et le procédé selon l'invention présentent notamment l'avantage de ne pas centraliser d'informations d'état civil, cible d'attaque et d'offrir un niveau de sécurité ELDAS substantiel ou fort, plus élevé que la majorité des dispositifs connus de l'art antérieur. Aucune base citoyenne n'est créée.

## Revendications

1. Procédé pour authentifier un utilisateur équipé d'un dispositif mobile (8) dans un système comprenant un site web requérant la génération d'un jeton d'usage J, un serveur comprenant un annuaire de compte identité numérique pour des utilisateurs, **caractérisé en ce qu'**il comporte au moins les étapes suivantes :
o Sur requête d'un utilisateur (1), le site web demande la génération d'un jeton d'usage J ayant une durée de validité limitée dans le temps pour le compte de l'utilisateur,
o La demande de génération de jeton d'usage est transmise (108) à un annuaire de compte identité de compte (5) qui vérifie l'état du compte identité numérique de l'utilisateur (109),
o Dans le cas où l'état de compte d'identité numérique est valable, un système de génération de jeton génère (111) un jeton d'usage de durée de validité, chiffre un mot de passe à usage unique OTP avec une clé publique de l'utilisateur, et envoie une demande d'émission de jeton d'usage vers le dispositif mobile de l'utilisateur, (112),
o L'utilisateur (114, 115) décide d'accepter ou de refuser cette demande d'émission de jeton d'usage J,
o Lorsque l'utilisateur accepte l'émission d'un jeton d'usage J, (117), l'utilisateur saisit un code d'authentification au niveau de son dispositif mobile, cette saisie générant une demande de déchiffrement (120) du mot de passe à usage unique OTP chiffré vers une application d'identification d'identité numérique (121) implémentée sur un élément sécurisé (6) qui déchiffre le mot de passe OTP et le transmet pour affichage au niveau d'un dispositif de saisie des informations de l'utilisateur (122) et simultanément l'application d'identification d'identité numérique vérifie la validité temporelle du jeton généré,
o L'utilisateur va saisir l'OTP sur le site web (123),
o Le site internet vérifie l'OTP (124) en utilisant l'OTP généré avec la clé publique de site, (130) au niveau du système de génération d'un jeton d'usage J, l'OTP ayant été reçu et déchiffré par le site, et simultanément le site web vérifie la validité temporelle du jeton d'usage généré,
o Suite au résultat de cette vérification, l'accès de l'utilisateur au site web est accepté(125) ou l'accès est refusé(126).

2. Procédé selon la revendication 1 **caractérisé en ce que** l'on utilise un jeton d'usage J comprenant au moins les paramètres suivants : date de création, heure de création, durée de validité, type d'usage, numéro de jeton, pseudo de l'utilisateur, signature du hash du contenu de jeton.

3. Procédé selon la revendication 2 **caractérisé en ce que** l'on utilise un jeton d'usage J comprenant un OTP chiffré avec une clé publique du site web ou une clé de l'utilisateur.

4. Procédé selon l'une des revendications 2 ou 3 **caractérisé en ce que** l'on utilise un jeton d'usage J comprenant les données bancaires de l'utilisateur chiffrées avec OTP.

5. Système pour authentifier un utilisateur (1) équipé d'un dispositif mobile (8) comprenant un site web (3), un serveur de jeton d'usage (4) communiquant avec le site web, **caractérisé en ce qu'**il comporte au moins les éléments suivants :
- Un annuaire de compte identité numérique (5) communiquant avec le serveur de jeton d'usage (4) et avec une application utilisateur (7), ledit annuaire de compte d'identité numérique étant adapté à vérifier l'état du compte identité numérique de l'utilisateur, le serveur de jeton d'usage (4) étant adapté à générer un jeton d'usage de durée de validité, chiffrer un mot de passe à usage unique OTP avec une clé publique de l'utilisateur, et à transmettre une demande d'émission de jeton d'usage vers le dispositif mobile de l'utilisateur,
- Une application chargée sur un support (6) configurée pour déchiffrer un mot de passe à usage unique chiffré OTP, et transmettre l'OTP déchiffré vers l'application utilisateur (7), ladite application étant activée lorsque l'utilisateur accepte l'émission d'un jeton d'usage,
- le site web (3) est configuré pour la saisie des informations d'identité propres à l'utilisateur (1) et
- pour vérifier l'OTP déchiffré en utilisant l'OTP généré avec une clé publique de site, (130) au niveau du système de génération d'un jeton d'usage J,
- simultanément vérifier la validité temporelle du jeton d'usage généré, et
- suite au résultat de cette vérification, accepter ou refuser l'accès de l'utilisateur au site web.

6. Système selon la revendication 5 **caractérisé en ce que** le support (6) et l'application utilisateur (7) communiquent via une liaison sans contact.

7. Système selon l'une des revendications 5 ou 6 **caractérisé en ce que** le serveur de jeton d'usage est configuré pour générer des jetons d'usage comprenant au moins les informations suivantes : date de création, heure de création, durée de validité, type d'usage, numéro de jeton, pseudo de l'utilisateur, OTP chiffré avec une clé de l'utilisateur ou avec une clé du site web, signature du hash du contenu de jeton et/ou données bancaires

8. Système selon l'une des revendications 5 à 7 **caractérisé en ce que** le support (6) est une carte à puce.

9. Système selon l'une des revendications 5 à 8 **caractérisé en ce que** l'utilisateur (1) est équipé d'un téléphone mobile, d'un ordinateur personnel ou d'une tablette permettant la saisie des données.

## Patentansprüche

1. Verfahren zum Authentifizieren eines mit einem mobilen Gerät (8) ausgestatteten Benutzers in einem System mit einer Website, die die Erzeugung eines Verwendungstokens J erfordert, wobei ein Server ein digitales Identitätskontenverzeichnis für Benutzer umfasst, **dadurch gekennzeichnet, dass** es mindestens die folgenden Schritte beinhaltet:
o auf Anforderung eines Benutzers (1), Anfordern, durch die Website, der Erzeugung eines Verwendungstokens J mit einer zeitlich begrenzten Gültigkeitsdauer für das Konto des Benutzers,
o Übertragen (108) der Anforderung zum Erzeugen eines Verwendungstokens an ein Identitätskontenverzeichnis (5), das den Status der digitalen Kontoidentität des Benutzers verifiziert (109),
o Erzeugen (111), durch ein Tokenerzeugungssystem, falls der Status des digitalen Identitätskontos gültig ist, eines Verwendungstokens mit einer Gültigkeitsdauer, Verschlüsseln eines Einmal-Passworts OTP mit einem öffentlichen Schlüssel des Benutzers und Senden (112) einer Anforderung zum Senden eines Verwendungstokens an das mobile Gerät des Benutzers,
o Beschließen seitens des Benutzers, diese Anforderung zum Senden eines Verwendungstokens J zu akzeptieren oder abzulehnen (114, 115),
o wenn der Benutzer das Senden eines Verwendungstokens J akzeptiert, Eingeben (117), durch den Benutzer, eines Authentifizierungscode an seinem mobilen Gerät, wobei diese Eingabe eine Anforderung (120) zum Entschlüsseln (121) des verschlüsselten Einmal-Passworts OTP an eine Anwendung zum Identifizieren digitaler Identitäten generiert, die auf einem sicheren Element (6) implementiert ist, das das Passwort OTP entschlüsselt und zur Anzeige auf einem Benutzerinformationseingabegerät überträgt (122) und gleichzeitig die Anwendung zum Identifizieren digitaler Identitäten die zeitliche Gültigkeit des erzeugten Tokens verifiziert,
o Eingeben (123) des OTP durch den Benutzer auf der Website,
o Verifizieren (124) des OTP durch die Website, anhand des mit dem öffentlichen Schlüssel der Site erzeugten (130) OTP, an dem System zum Erzeugen eines Verwendungstokens J, nachdem das OTP von der Site empfangen und entschlüsselt wurde, und gleichzeitig Verifizieren der zeitlichen Gültigkeit des erzeugten Verwendungstokens durch die Website,
o Akzeptieren (125) oder Verweigern (126) des Zugriffs des Benutzers auf die Website je nach dem Ergebnis dieser Verifizierung.

2. Verfahren nach Anspruch 1, **dadurch gekennzeichnet, dass** ein Verwendungstoken J benutzt wird, das mindestens die folgenden Parameter umfasst: Erzeugungsdatum, Erzeugungszeit, Gültigkeitsdauer, Verwendungstyp, Tokennummer, Pseudonym des Benutzers, Hash-Signatur des Tokeninhalts.

3. Verfahren nach Anspruch 2, **dadurch gekennzeichnet, dass** ein Verwendungstoken J benutzt wird, das ein OTP umfasst, das mit einem öffentlichen Schlüssel der Website oder einem Schlüssel des Benutzers verschlüsselt ist.

4. Verfahren nach einem der Ansprüche 2 oder 3, **dadurch gekennzeichnet, dass** ein Verwendungstoken J benutzt wird, das die mit OTP verschlüsselten Bankdaten des Benutzers umfasst.

5. System zum Authentifizieren eines mit einem mobilen Gerät (8) ausgestatteten Benutzers (1), das eine Website (3) umfasst, wobei ein Verwendungstoken-Server (4) mit der Website kommuniziert, **dadurch gekennzeichnet, dass** es mindestens die folgenden Elemente umfasst:
- ein digitales Identitätskontenverzeichnis (5), das mit dem Verwendungstoken-Server (4) und mit einer Benutzeranwendung (7) kommuniziert, wobei das digitale Identitätskontenverzeichnis so ausgelegt ist, dass es den Status des digitalen Identitätskontos des Benutzers verifizieren kann, wobei der Verwendungstoken-Server (4) zum Erzeugen eines Verwendungstokens mit einer Gültigkeitsdauer, Verschlüsseln eines Einmal-Passworts OTP mit einem öffentlichen Schlüssel des Benutzers und Übertragen einer Anforderung zum Senden eines Verwendungstokens an das mobile Gerät des Benutzers ausgelegt ist,
- eine Anwendung, die auf einen Träger (6) geladen ist, konfiguriert zum Entschlüsseln eines verschlüsselten Einmal-Passworts OTP und zum Übertragen des entschlüsselten OTP an die Benutzeranwendung (7), wobei die Anwendung aktiviert wird, wenn der Benutzer das Senden eines Verwendungstokens akzeptiert,
- die Website (3) ist konfiguriert zum Eingeben von benutzerspezifischen Identitätsinformationen (1), und
- zum Verifizieren des entschlüsselten OTP unter Verwendung des mit einem öffentlichen Schlüssel der Site erzeugten (130) OTP an dem System zum Erzeugen eines Verwendungstokens J,
- zum gleichzeitigen Verifizieren der zeitlichen Gültigkeit des erzeugten Verwendungstokens, und
- zum Akzeptieren oder Verweigern des Zugriffs des Benutzers auf die Website je nach dem Ergebnis dieser Verifizierung.

6. System nach Anspruch 5, **dadurch gekennzeichnet, dass** der Träger (6) und die Benutzeranwendung (7) über eine kontaktlose Verbindung kommunizieren.

7. System nach einem der Ansprüche 5 oder 6, **dadurch gekennzeichnet, dass** der Verwendungstoken-Server zum Erzeugen von Verwendungstoken konfiguriert ist, die mindestens die folgenden Informationen enthalten: Erzeugungsdatum, Erzeugungszeit, Gültigkeitsdauer, Verwendungstyp, Tokennummer, Pseudonym des Benutzers, OTP, verschlüsselt mit einem Schlüssel des Benutzers oder mit einem Schlüssel der Website, Hash-Signatur des Tokeninhalts und/oder Bankdaten.

8. System nach einem der Ansprüche 5 bis 7, **dadurch gekennzeichnet, dass** der Träger (6) eine Chipkarte ist.

9. System nach einem der Ansprüche 5 bis 8, **dadurch gekennzeichnet, dass** der Benutzer (1) mit einem Mobiltelefon, einem Personalcomputer oder einem Tablet zur Dateneingabe ausgestattet ist.

## Claims

1. A method for authenticating a user equipped with a mobile device (8) in a system comprising a website requiring the generation of a usage token J, a server comprising a digital identity account directory for users, **characterised in that** it comprises at least the following steps:
o upon request from a user (1), the website requests the generation of a usage token J having a time-limited validity duration for the account of the user;
o the request to generate a usage token is transmitted (108) to a digital identity account directory (5) that verifies (109) the status of the digital identity account of the user;
o in the event that the status of the digital identity account is valid, a token generation system generates (111) a usage token with a validity duration, encrypts a one-time password OTP with a public key of the user and sends (112) a request to transmit a usage token to the mobile device of the user;
o the user decides to accept or to refuse (114, 115) this request to transmit a usage token J;
o when the user accepts the transmission of a usage token J, the user enters (117) an authentication code on their mobile device, this entry generating (120) a request to decrypt (121) the encrypted one-time password OTP to a digital identity identification application implemented on a secure element (6), which decrypts the OTP password and transmits it so that it can be displayed (122) on a device for entering the information of the user and, at the same time, the digital identity identification application verifies the temporal validity of the generated token;
o the user enters (123) the OTP on the website;
o the website verifies (124) the OTP using the OTP generated (130) with the site public key on the system for generating a usage token J, the OTP having been received and decrypted by the site, and, at the same time, the website verifies the temporal validity of the generated usage token;
o accepting (125) or refusing (126) the access of the user to the website according to the result of this verification.

2. The method according to claim 1, **characterised in that** a usage token J is used that comprises at least the following parameters: date of creation, time of creation, validity duration, type of use, token number, pseudonym of the user, hash signature of the token content.

3. The method according to claim 2, **characterised in that** a usage token J is used comprising an OTP encrypted with a public key of the website or with a key of the user.

4. The method according to any one of claims 2 or 3, **characterised in that** a usage token J is used that comprises the bank data of the user encrypted with the OTP.

5. A system for authenticating a user (1) equipped with a mobile device (8) comprising a website (3), a usage token server (4) communicating with the website, **characterised in that** it comprises at least the following elements:
- a digital identity account directory (5) communicating with the usage token server (4) and with a user application (7), said digital identity account directory being adapted to verify the status of the digital identity account of the user, the usage token server (4) being adapted to generate a usage token with a validity duration, to encrypt an one-time password OTP with a public key of the user and to transmit a request to send the usage token to the mobile device of the user;
- an application loaded on a medium (6) configured to decrypt an encrypted one-time password OTP and to transmit the decrypted OTP to the user application (7), said application being activated when the user accepts the sending of a usage token;
- the website (3) is configured to enter identity information specific to the user (1) and
- to verify the decrypted OTP using the OTP generated (130) with a public site key on the system for generating a usage token J;
- to simultaneously verify the temporal validity of the generated usage token; and
- according to the result of this verification, to accept or to refuse the access of the user to the website.

6. The system according to claim 5, **characterised in that** the medium (6) and the user application (7) communicate via a contactless link.

7. The system according to any one of claims 5 or 6, **characterised in that** the usage token server is configured to generate usage tokens comprising at least the following information: creation date, creation time, validity duration, type of use, token number, pseudonym of the user, OTP encrypted with a key of the user or with a key of the website, hash signature of the token content and/or bank data.

8. The system according to any one of claims 5 to 7, **characterised in that** the medium (6) is a chip card.

9. The system according to any one of claims 5 to 8, **characterised in that** the user (1) is equipped with a mobile telephone, a personal computer or a tablet allowing data entry.
